# EUROPEAN PATENT SPECIFICATION

(11) **EP 3 092 047 B1**
(45) Date of publication and mention of the grant of the patent: **28.03.2018**
(21) Application number: 14827668.6
(22) Date of filing: 22.12.2014
(51) Int. Cl.: B01D 17/04, C10G 33/04

(54) **COMPOSITION AND METHOD FOR OILFIELD WATER CLARIFICATION PROCESSES**
ZUSAMMENSETZUNG UND VERFAHREN FÜR ÖLFELDWASSERKLÄRPROZESSE
COMPOSITION ET PROCÉDÉ POUR PROCESSUS DE CLARIFICATION D'EAU DE CHAMPS PETROLIFERES

(30) Priority: 09.01.2014 US 201461925450 P
(43) Date of publication of application: 16.11.2016
(73) Proprietor: Dow Global Technologies LLC, Midland, MI 48674 (US)
(72) Inventor: YOUNG, Kaylie, L., Freeport, TX 77541 (US); AYERS, Callie, M., Freeport, TX 77541 (US); HOYLES, Stephen, M., Freeport, TX 77541 (US)
(74) Representative: Murgitroyd & Company
(86) International application number: PCT/US2014/071789
(87) International publication number: WO 2015/105674

(56) References cited:
- US-A- 5 128 046
- US-A- 5 919 882
- US-A1- 2011 031 163

## Description

### FIELD OF THE INVENTION

The present invention relates to a clarifier composition and method for demulsifying and clarifying oil-in-water emulsions and dispersions derived from petroleum production and refining operations, wherein said water clarifier composition demonstrates good pumpability while reducing equipment fouling.

### BACKGROUND OF THE INVENTION

A dispersion is a mixture in which one phase is dispersed in another, continuous phase, of a different composition or phase. An emulsion is a dispersion comprising two immiscible liquids, one of which is dispersed as droplets (internal phase) in the other (continuous or external phase). Thus, all emulsions are dispersions, but not all dispersions are emulsions. Stable emulsions are those which are unable to resolve themselves into their constituent phases without some form of mechanical or chemical treatment.

In the petroleum industry, various operations including, but not limited to, exploration, production, refining and chemical processing of hydrocarbons including, but not limited to, crude oil, gas and their derivative products, routinely produce mixtures and dispersions of oil and water. Such mixtures typically also contain other compounds, including but not limited to, waxes, asphaltenes, various salts, suspended materials, biological surface active material from the ground, added surface active corrosion/scale inhibiting reagents, etc., which may vary from location to location. In addition, synthetic and natural surfactants produced either in-situ or added in enhanced oil recovery techniques such as akali-surfactant (AS) and alkali-surfactant-polymer (ASP) floods, can cause phase separation issues. Along with the presence of these other compounds, high shear and mixing forces cause these oil and water mixtures to form dispersions and relatively stable emulsions. Some such emulsions are water-in-oil emulsions, commonly referred to in the petroleum industry as "regular" emulsions, in which oil is the continuous phase. Others are oil-in-water emulsions, commonly referred to in the petroleum industry as "reverse" emulsions, in which water is the continuous phase.

"Breaking" oil-water emulsions means separation of the oil and water phases. The term "breaking" implies that the emulsifying films around the droplets of water or oil are "broken" so that coalescing may occur and result in separation of the oil and water phases over time, for example, by gravitational settling. For example, demulsifiers describe the class of agents which break or separate an emulsion, whether normal or reverse, into its constituent phases. Clarifiers describe compounds which are applied to break emulsions and separate the oil phase from the water, thereby, making the water "clearer." There is known to be some overlap in the types of compounds which effectively demulsify and those which clarify, i.e., some compounds are useful for both demulsifying and clarifying oil-water emulsions and dispersions.

During the production phase of an oil well, a large quantity of water may be pumped down into the ground via one or more injector wells to push oil in the underground formation toward the producing well and out of the ground. As the wells age, formation water is produced from the well in combination with the oil. Further, in many secondary and tertiary oil recovery techniques such as steam flooding, oil extraction from tar/oil sands and steam assisted gravity drainage (SAGD), large amounts of water are used to recover oil. In such circumstances, the oil typically comes out of the ground as an emulsion. To break this emulsion, i.e., separate the water from the oil phase, demulsifiers such as polyalkylene glycols (PAGs), block copolymers of poly(ethylene oxide) (PEO) and poly(propylene oxide) (PPO), and alkylphenol resin alkoxylates are generally used. In some cases water clarifiers are also added to the crude emulsion stream.

Once the emulsion is separated into an oil fraction and a water fraction, the produced water fraction (i.e., "produced water") may contain about 1000 parts per million (ppm) oil entrained in the water phase. In other words, a "reverse" i.e., oil-in-water, emulsion is formed. This emulsion appears anywhere from brown to black, depending on the amount of impurities present. Such produced water may be generated in huge quantities (i.e., up to millions of liters per day), and is either reinjected into the formation, or disposed of into the ocean. Governmental regulations, such as the US Clean Water Act and the US EPA Code of Federal Regulations in the United States, require reduction of the amount of oil content down to very low levels before the produced water may be discharged. Although the amount of oil permitted in discharged water under such regulations varies from jurisdiction to jurisdiction, the standard is generally very low, i.e., usually much less than 100 ppm oil in water. Further with the increasing cost and regulation on fresh water use, low levels of oil are demanded for water reuse. The practice of reducing the oil-in-water from the naturally occurring amount to below 50 ppm is commonly known as "clarification," and is simply the breaking of the reverse emulsion. Clarification of such demulsified oilfield water typically involves use of acrylate polymers, cationic polymers, cationic polyelectrolytes, or water-soluble amphiphilic polymers to flocculate suspended oily and particulate materials and, thereby, obtain clear(er) water.

Successful selection and use of effective polymer compounds to demulsify and clarify oil-water emulsions formed during petroleum industry operations is very complex because whether or not a particular polymer will work depends on many factors including, but not limited to: the geology and location of underground oil-containing formations, the source of water, the nature of suspended solids, the type of oil, the nature of other reagents used, etc. Thus, there is no one solution for the practice of demulsification and clarification of oilfield emulsions. Depending on individual oilfields and the conditions involved, different polymers will provide optimum performance in different locations.

The prior art includes many patents and general literature relating to demulsification and clarification of oil-water dispersions and emulsions produced by petroleum industry operations.

For example, US Patent Application Publication US 2007/0244248 discloses the use of a polymer containing aromatic and oleophilic groups for demulsifying oil-water emulsions. USP 5,100,582 discloses a very specific composition of tetrapolymer containing random combinations of acrylic acid, methacrylic acid, methyl methacrylate and butyl acrylate for use as demulsifying agent for water-in-crude oil.

Further, USP 6,025,426 and USP 5,330,650 each teach the use of hydrophilic cationic copolymers of acrylamide having high molecular weight as water clarification aids. USP 4,582,628 discloses the use of vinyl-type polymers, derived from hydrophilic and hydrophobic vinyl monomers, for demulsifying petroleum industry emulsions of oil and water.

Low molecular weight, water soluble, cationic polymers of dimethylaminoethyl acrylate methyl chloride and benzyl chloride quaternary salt are disclosed in USP 5,643,460 for breaking oil in water emulsions resulting from oilfield operations. USP 5,472,617 provides a method for demulsifying a crude oil and water emulsion which involves adding demulsifiers made from (meth)acrylates of oxyalkylates copolymerized with hydrophilic monomers.

Chinese Patent Application Publication CN1883740 discloses the use of polymers derived from hydrophobic (meth)acrylate ester monomers and hydrophilic (meth)acrylic acid monomers, and having molecular weights of 5,000 to 100,000 g/mol, for demulsifying crude oil and water emulsions.

US Patent Publication US 2011 0031163 discloses hydrophobically modified, surfactant modified, and lightly crosslinked anionic acrylate copolymers for separating oil and water dispersions or emulsions generated in connection with oilfield operations.

USP 7,431,845 discloses metal ions may be used to break reverse emulsions along with another chemical to flocculate the oil. However, USP 6,244,346 teaches under certain conditions, metal ions may lead chemical and/or biological incrustation and fouling.

USP 5,919,882 describes polymeric flocculants formed from anionic, and optionally non-ionic, ethylenically unsaturated monomers. USP 5,128,046 relates to treating oil production waters with dissolved iron salts and a water soluble vinylic polymer.

It is common for contaminant deposit to accumulate within conduits and on equipment utilized in the transportation and transmission of oilfield fluids. Chemical and biological incrustation are major causes of deposits forming within conduits and equipment which can restrict the flow of the fluid through the pipeline. Further, such deposits and the congestion they create typically lead to the deterioration of pumps, valves, meters, and other equipment utilized to propel and monitor the flow of the fluid through a pipeline system. These types of deposits typically result in the loss of production and substantial expenditures for thermal, mechanical, and/or chemical remediation to restore full flow capacity to a pipeline. There exists a need for water clarifier compositions useful for demulsifying petroleum industry emulsions of oil and water which are readily pumpable and minimize equipment fouling.

### SUMMARY OF THE INVENTION

The present invention provides such a water clarifier composition and a method for use thereof for separating oil and water phases of an oil-water dispersion or emulsion derived from petroleum industry operations. The aqueous water clarifier composition comprises i) a latex dispersion of an anionic polymer in an amount of from 20 to 80 weight percent, wherein the anionic polymer comprises: A) at least one C₃-C₈ α,β-ethylenically unsaturated carboxylic acid monomer, preferably methacrylic acid, acrylic acid or a mixture thereof, preferably in an amount of 15 to 80 percent by weight; B) at least one nonionic, copolymerizable α,β-ethylenically unsaturated monomer, preferably a monovinyl ester, more preferably ethyl acrylate, preferably in an amount of 15 to 80 percent by weight; C) one or more of the following in an amount from 0 to 50 percent by weight: (1) at least one nonionic vinyl surfactant ester; (2) at least one nonionic, copolymerizable α,β-ethylenically unsaturated monomer having longer polymer chains than monomer B); and, (3) at least one nonionic urethane monomer; and D) a crosslinker in an amount from 0 to 5 percent by weight of, wherein weight percents of A, B, C, and D total 100 percent and are based on the total weight of the latex dispersion of an anionic polymer i); ii) a chelating agent, preferably sodium salt of EDTA or the sodium salt of citric acid, in an amount of from 500 to 8,000 ppm; iii) a base in an amount from 0.01 mmol/g to 0.22 mmol/g based on the dry weight of the anionic polymer i); iv) an alcohol in an amount from 0 to 70 weight percent, more preferably from 5 to 70 weight percent, preferably the alcohol is glycerin, propylene glycol, or ethylene glycol; and v) water which makes up the balance of the composition, weight percents for i), ii), iii), iv) and v) total 100 percent and are based on the total weight of the aqueous water clarifier composition.

In one embodiment of the present invention, the at least one C₃-C₈ α,β-ethylenically unsaturated carboxylic acid monomer in the latex dispersion described herein above has the formula: 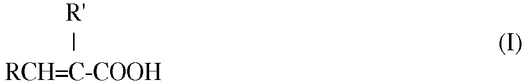 where R is H, and R' is H, C₁-C₄ alkyl, or --CH₂COOX; R is --COOX and R' is H or-CH₂COOX; or R is CH₃ and R' is H; and X is H or C₁-C₄ alkyl.

The at least one nonionic, copolymerizable α,β-ethylenically unsaturated monomer have the formula:

CH₂=CYZ (II)

where Y is H and Z is -COOR, --C₆H₄R', CN, Cl, 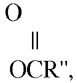 or -CH=CH₂; Y is CH₃ and Z is --COOR, -C₆H₄R', CN or -CH=CH₂; or Y and Z are Cl; and R is C₁-C₈ alkyl or C₂-C₈ hydroxyalkyl; R' is H, Cl, Br, or C₁-C₃ alkyl; and R" is C₁-C₈ alkyl.

Furthermore, if present, monomeric component C) is one or more of the following monomers:
(1) at least one nonionic vinyl surfactant ester of the formula: 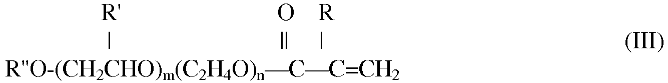 where R is H or CH₃, each R' is C₁-C₄ alkyl, R" is C₈-C₂₀ alkyl or C₈-C₁₆ alkylphenyl, n is an average number from 6-100, and m is an average number from about 0-50 provided that n ≥ m and (n + m) is about 6-100;
(2) at least one nonionic, copolymerizable α,β-ethylenically unsaturated monomer having longer polymer chains than monomer B) and having the formula;

   CH₂=CYZ (IV)

   where Y is H and Z is --COOR, --C₆H₄R', or 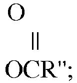 Y is CH₃ and Z is -COOR, -C₆H₄R' and R is C₁₀-C₂₀ alkyl hydroxyalkyl; R' is C₄-C₈ alkyl; and R" is C₉-C₂₀ alkyl; and
(3) at least one nonionic urethane monomer which is the urethane reaction product of a monohydric non-ionic surfactant with a monoethylenically unsaturated monoisocyanate.

In another embodiment, the present invention provides a method for inhibiting and mitigating the formation of oil-water emulsions generated during petroleum industry operations from oil and aqueous precursors which become mixed during the operations. This method for inhibiting and mitigating the formation of oil-water emulsions comprises providing a demulsifying effective amount, preferably 1 to 10,000 ppm, of the aforesaid aqueous water clarifier composition to the oil precursor, the aqueous precursor, or both, prior to, during or after mixing of the precursors.

The oil-water dispersion or emulsion may be an oil in water dispersion or emulsion, or a water in oil dispersion or emulsion.

### BRIEF DESCRIPTION OF THE DRAWINGS

**FIG. 1** shows a 1 percent crude oil emulsion untreated, treated with Example 3, and treated with Comparative Example C.
**FIG. 2** is a photograph illustrating the results of an agglomeration test for Comparative Example A and Example 1.
**FIG. 3** is a photograph illustrating the results of an agglomeration test for Comparative Example C and Example 3.
**FIG. 4** is a photograph of a TEXSTEAM™ series 2200 piston pump used to test pump fouling.
**FIG. 5** is a photograph illustrating the results of a pump fouling test for Comparative Example A.
**FIG. 6** is a photograph illustrating the results of pump fouling tests versus time for Comparative Example A and Example 1.

### DETAILED DESCRIPTION OF THE INVENTION

A "polymer," as used herein and as defined by FW Billmeyer, JR. in Textbook of Polymer Science, second edition, 1971, is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof. Chemicals that react with each other to form the repeat units of a polymer are known herein as "monomers," and a polymer is said herein to be made of, or comprise, "polymerized units" of the monomers that reacted to form the repeat units. The chemical reaction or reactions in which monomers react to become polymerized units of a polymer, whether a homopolymer or any type of copolymer, are known herein as "polymerizing" or "polymerization."

Polymer molecular weights can be measured by standard methods such as, for example, size exclusion chromatography (also called gel permeation chromatography) or intrinsic viscosity.

As used herein, the prefix "(meth)acryl-" means "methacryl- or acryl-."

The term "petroleum industry operations," as used herein, includes, but not is limited to, activities and processes for exploration, production, refining and chemical processing of hydrocarbons including, but not limited to, crude oil, gas and their derivatives. For example, exploration often involves the initial drilling of wells wherein drilling fluid, or drilling mud, which is typically a mixture of liquid and gaseous fluids and solids, is used as lubricant and heat sink. Suitable dispersants are helpful to stabilize such mud to a homogenous composition. Production operations include, but are not limited to, pumping large quantities of water into the ground, as described above, which commensurately generates large quantities of "formation water," an oil in water dispersion or emulsion. Breaking of such emulsions with additives to remove and recover oil from the produced water is a common and beneficial practice. Oil refining processes, for example, include but are not limited to, the removal of inorganic solids and salts (referred to as "desalting") from produced oil. Desalting operations produce oil in water mixtures which require clarification and/or demulsifying prior to discharge or reuse. Lastly, chemical processing in the petroleum industry includes many various activities such as, for example, without limitation, production of ethylene by fractionation which involves water quench operations. The quench operations of ethylene manufacturing generate quench waters containing heavy, middle and light hydrocarbons and, therefore, require demulsifying and/or clarification. Persons of ordinary skill in the art will readily recognize the many various operations performed in the petroleum industry to which the present invention is reasonably applicable and the invention is intended to include all such applications.

The term "oil-water emulsion," as used herein, includes dispersions even where a stable emulsion does not exist and also includes water in oil emulsions and oil in water emulsions, as well as multiple emulsions, such as water in oil in water. Oil is the continuous, or external, phase in water in oil emulsions. For oil in water emulsions, the continuous, or external, phase is water.

Endpoints of ranges are considered to be definite and are recognized to incorporate within their tolerance other values within the knowledge of persons of ordinary skill in the art, including, but not limited to, those which are insignificantly different from the respective endpoint as related to this invention (in other words, endpoints are to be construed to incorporate values "about" or "close" or "near" to each respective endpoint). The range and ratio limits, recited herein, are combinable. For example, if ranges of 1-20 and 5-15 are recited for a particular parameter, it is understood that ranges of 1-5, 1-15, 5-20, or 15-20 are also contemplated and encompassed thereby.

The term stable when referring to the aqueous water clarifier compositions of the present invention is defined herein to mean the composition does not form a gel or precipitate due to temperature, be it at a low temperature, a high temperature, or cycling between a low temperature and a high temperature. Typically, low temperatures are -40°C or higher and high temperatures are 60°C and lower.

The present invention provides an aqueous water clarifying composition and a method for use thereof to separate oil and water phases of an oil-water dispersion or emulsion derived from petroleum industry operations. The aqueous water clarifying composition comprises: i) a latex dispersion of an anionic polymer wherein the anionic polymer comprises:
A) at least one C₃-C₈ α,β-ethylenically unsaturated carboxylic acid monomer;
B) at least one nonionic, copolymerizable α,β-ethylenically unsaturated monomer;
C) optionally, one or more of the following:
   (1) at least one nonionic vinyl surfactant ester;
   (2) at least one nonionic, copolymerizable α,β-ethylenically unsaturated monomer having longer polymer chains than monomer B); and,
   (3) at least one nonionic urethane monomer; and
D) optionally, at least one crosslinker.

The latex dispersion of an anionic polymer may also comprise up to about 10 percent by weight, based on the total weight of the latex dispersion of an anionic polymer, of other anionic, cationic monomers, or nonionic monomers.

The aqueous water clarifier composition of the present invention comprises a latex dispersion of an anionic polymer i) in an amount equal to or greater than 20 weight percent, preferably equal to or greater than 30, and more preferably equal to or greater than 40 weight percent, based on the total weight of the aqueous water clarifier composition. The aqueous water clarifier composition of the present invention comprises a latex dispersion of an anionic polymer i) in an amount equal to or less than 80 weight percent, preferably equal to or less than 70, and more preferably equal to or less than 60 weight percent, based on the total weight of the aqueous water clarifier composition.

The aqueous water clarifier composition of the present invention further comprises a chelating agent ii). Chelants, or chelating agents, suitable for use with the compositions described herein include, but are not limited to, citric acid, one or more sodium salt of citric acid, ethylenediamine tetraacetic acid (EDTA), one or more sodium salt of EDTA, hydroxyethyl ethylenediamine triacetic acid (HEDTA), dicarboxymethyl glutamic acid tetrasodium salt (GLDA), diethylenetriamine pentaacetic acid (DTPA), propylenediaminetetraacetic acid (PDTA), ethylenediaminedi-(o-hydroxyphenylacetic) acid (EDDHA), glucoheptonic acid, gluconic acid, nitrilotriacetic acid (NTA), and the like. Other chelants or chelating agents also may be suitable for use herein.

Chelating agents work by complexing with metal ions including transition metal ions such as iron, copper, chromium, nickel, and manganese, and water hardness ions such as calcium and magnesium, to form a complex which keeps the metal ions (e.g., iron, copper, manganese, calcium, chromium, nickel, or magnesium cations) from interacting with any carbonate (or other) anions that may be present. Metal sources, in particular iron (III) sources, may be from the subterranean formation itself, the drilling equipment (pipes, pumps, etc.), one or more of the process fluid(s) and/or additive(s), or combinations thereof. Not be held to any particular theory, Applicants' believe the chelating agents prevent the metal ions, in particular iron (III), from forming complexes with carboxyl groups within the anionic polymers which can lead to aggregate formation resulting in increased viscosity of the process fluid and/or pipe and/or pump fouling.

The chelating agent ii) is present in the aqueous water clarify composition of the present invention in an amount equal to or greater than 500 ppm, preferably equal to or greater than 1,000 ppm, preferably equal to or greater than 3,000 ppm, and more preferably equal to or greater than 5,000 ppm based on the total weight of the aqueous water clarifier composition. The chelating agent ii) is present in the aqueous water clarify composition of the present invention in an amount equal to or less than 8,000 ppm, preferably equal to or less than 7,000 ppm, and more preferably equal to or less than 5,000 ppm based on the total weight of the aqueous water clarifier composition.

The aqueous water clarifier composition comprises a base iii). Surprisingly, we have found that the addition of base allows for a greater concentration of anionic polymer in the aqueous water clarifier composition of the present invention while retaining acceptable viscosity, especially at reduced temperatures, and remaining stable at higher temperatures and/or remaining stable while cycling between low and high temperatures. Too little base may result in instability during temperature cycling, e.g., the aqueous water clarifier composition may form a gel or precipitate. Too much base may result in instability, e.g., gel formation, at higher temperatures and during temperature cycling. Different anionic polymers require different amounts of base, an effective amount of base for a specific anionic polymer is an amount which provides stability to the aqueous water clarifier composition between -40°C to 60°C and cycling between -40°C to 60°C.

Suitable bases are strong bases such as lithium hydroxide, sodium hydroxide, potassium hydroxide, barium hydroxide or rubidium hydroxide and weak bases such as ammonia, methylamine and pyridine, preferably sodium hydroxide. The base is present in an amount equal to or greater than 0.01 mmol per gram based on the dry weight of the anionic polymer (mmol/g), preferably equal to or greater than 0.05, preferably equal to or greater than 0.065, preferably equal to or greater than 0.08, and more preferably equal to or greater than 0.1 mmol/g based on the dry weight of the anionic polymer. The base is present in an amount equal to or less than 0.22 mmol/g based on the dry weight of the anionic polymer present in the latex dispersion of an anionic polymer i), preferably equal to or less than 0.17 mmol/g, and more preferably equal to or less than 0.12 mmol/g based on the dry weight of the anionic polymer present in the latex dispersion of an anionic polymer i).

The aqueous water clarifier composition optionally comprises an alcohol iv). Suitable alcohols may be selected from the group consisting of glycols, glycol ethers, methanol, ethanol and combinations thereof. Preferably, the alcohol is selected from isopropanol, diethyleneglycol monobutyl ether, ethyleneglycol monobutyl ether, diethylene glycol monoethyl ether, ethyleneglycol monobutylether, ethyleneglycol monopropylether, dipropyleneglycol monomethyl ether, dipropyleneglycol monobutyl ether, propylene glycol monomethyl ether, propyleneglycol monopropyl ether, propyleneglycol monobutyl ether, butyl acetate, propylene glycol, ethylene glycol, glycerin, and combinations thereof, preferably propylene glycol, more preferably ethylene glycol.

If present, the alcohol iv) is present in the aqueous water clarifier composition of the present invention in an amount equal to or greater than 5 weight percent, preferably equal to or greater than 25, and more preferably equal to or greater than 45 weight percent, based on the total weight of the aqueous water clarifier composition. If present, the alcohol iv) is present in the aqueous water clarifier composition of the present invention in an amount equal to or less than 70 weight percent, preferably equal to or less than 60, and more preferably equal to or less than 55 weight percent, based on the total weight of the aqueous water clarifier composition.

The aqueous water clarifier composition of the present invention comprises water. Water may be present in the latex dispersion of an anionic polymer i), chelating agent ii), base iii), and/or the optional alcohol iv). If the latex dispersion of an anionic polymer i) comprises water and/or the chelating agent ii) comprises water and/or the base iii) comprises water, and/or the optional alcohol comprises water, the water is included in the weight percents described in the ranges for i), ii), iii), and iv) herein above. However, additional water v) is added to the aqueous water clarifier composition. The amount of water added will make up the balance of the weight of the aqueous water clarifier composition such that the weight percents for i), ii), iii), iv), and v) add up to a total of 100 weight percent.

The present invention also provides a method for inhibiting and mitigating the formation of oil-water emulsions generated during petroleum industry operations from oil (organic) and water (aqueous) precursors which become mixed during said operations and otherwise form oil-water dispersions and emulsions. This method for inhibiting and mitigating the formation of oil-water emulsions comprises providing the above-described aqueous water clarifier composition to the oil precursor, the aqueous precursor, or both, prior to, during or after mixing of the precursors.

Whether provided to the precursors of oil-water dispersion or emulsions, or to already formed oil-water dispersions or emulsions, the use of the aqueous water clarifier composition in accordance with the present invention may reduce the viscosity of the resulting mixture of oil and water and, thus, better flow characteristics may be achieved which may facilitate further processing and handling.

Furthermore, whereas cationic polymers have typically been used in petroleum industry operations as demulsifiers and/or clarifiers of oil-water dispersions and emulsions, use of the latex dispersion of an anionic polymer in accordance with the methods of the present invention is expected to reduce potential harm to the environment. This is because it is believed that the latex dispersion of an anionic polymer described herein and their use as oil-water demulsifiers and clarifiers are less toxic than the cationic polymers previously used.

More particularly, the latex dispersion of an anionic polymer suitable for use in accordance with the present invention comprise 15 to 80 percent by weight, based on the total weight of the latex dispersion of an anionic polymer, of at least one unsaturated carboxylic acid monomer A), having the formula: 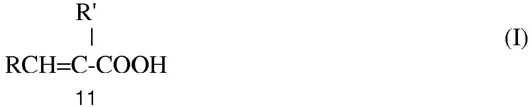 where R is H, and R' is H, C₁-C₄ alkyl, or --CH₂COOX; R is --COOX and R' is H or-CH₂COOX; or R is CH₃ and R' is H; and X is H or C₁-C₄ alkyl.

Suitable C₃-C₈ α,β-ethylenically unsaturated carboxylic acid monomers A) for use in the methods of the present invention include, for example, without limitation, (meth)acrylic acid, alpha-chloroacrylic acid, crotonic acid, fumaric acid, citraconic acid, mesaconic acid, itaconic acid, maleic acid, aconitic acid, and mixtures thereof. (Meth)acrylic acids are believed to be the most suitable.

The latex dispersion of an anionic polymer suitable for use in the methods of the present invention further comprise 15 to 80 percent by weight, based on the total weight of the latex dispersion of an anionic polymer, of at least one nonionic, copolymerizable α,β-ethylenically unsaturated monomer B), having the formula:

CH₂=CYZ (II)

where Y is H and Z is -COOR, -C₆H₄R', CN, Cl, 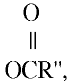 or -CH=CH₂; Y is CH₃ and Z is -COOR, -C₆H₄R', CN, C(O)OR, or -CH=CH₂; or Y and Z are Cl; and R is C₁-C₈ alkyl or C₂-C₈ hydroxyalkyl; R' is H, Cl, Br, or C₁-C₃ alkyl; and R" is C₁-C₈ alkyl.

Suitable nonionic, copolymerizable C₂-C₁₁ α,β-ethylenically unsaturated monomers B) for use in the methods of the present invention include, for example, without limitation, C₁-C₈ alkyl and C₂-C₈ hydroxyalkyl esters of acrylic and methacrylic acid including ethyl acrylate, ethyl methacrylate, methyl methacrylate, 2-ethylhexyl acrylate, propyl methacrylate, isopropyl methacrylate, butyl acrylate, butyl methacrylate, n-amyl methacrylate, sec-amyl methacrylate, hexyl methacrylate, crotyl methacrylate, hydroxy ethyl methacrylate, hydroxy propyl methacrylate, 2-hydroxyethyl acrylate, 2-hydroxybutyl methacrylate; styrene, vinyltoluene, isopropylstyrene, and p-chlorostyrene; vinyl acetate, vinyl butyrate, vinyl caprolate; acrylonitrile, methacrylonitrile, butadiene, isoprene, vinyl chloride, vinylidene chloride, vinyl propionate, vinyl butyrate, vinyl tert-butyrate, vinyl caprate, vinyl methyl ether, vinyl ethyl ether, vinyl n-propyl ether, vinyl iso-propyl ether, vinyl n-butyl ether, vinyl iso-butyl ether, vinyl phenyl ether, α-chlorovinyl phenyl ether, methacryonitrile, acrylamide, methacrylamide, N-alkyl acrylamides, N-aryl acrylamides, N-vinyl pyrrolidone, N-vinyl-3-morpholinones, N-vinyl-oxazolidone, N-vinyl-imidazole, and combinations thereof. In practice, a monovinyl ester such as ethyl acrylate, butyl acrylate, or a mixture thereof with styrene, hydroxyethyl acrylate, acrylonitrile, vinyl chloride or vinyl acetate is preferred.

The latex dispersion of anionic polymers suitable for use in the methods of the present invention may further comprise 0 to 50 percent by weight, based on the total weight of the latex dispersion of an anionic polymer, of one or more of the following monomers:
C1) at least one nonionic vinyl surfactant ester monomer, preferably having the formula: 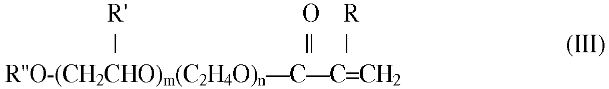 where R is H or CH₃, each R' is C₁-C₄ alkyl, R" is C₈-C₃₀ alkyl or C₈-C₁₆ alkylphenyl, n is an average number from 6-100, and m is an average number from 0 to 50 provided that n ≥ m and (n + m) is 6 to 100;
C2) at least one nonionic, copolymerizable α,β-ethylenically unsaturated monomer, preferably having longer polymer chains than monomer B) and having the formula:

   CH₂=CYZ (IV)

   where Y is H and Z is -COOR, --C₆H₄R', 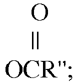 Y is CH₃ and Z is --COOR, — C₆H₄R', C(O)OR; and R is C₁₀-C₂₀ alkyl hydroxyalkyl; R' is C₄-C₈ alkyl; and R" is C₉-C₂₀ alkyl; or
C3) at least one nonionic urethane monomer, preferably the urethane reaction product of a monohydric non-ionic surfactant with a monoethylenically unsaturated monoisocyanate.

Suitable nonionic vinyl surfactant ester monomers C1) for use in the methods of the present invention are selected from the group consisting of:
(1) alkylphenoxypoly(ethyleneoxy)ethyl acrylates of the formula: 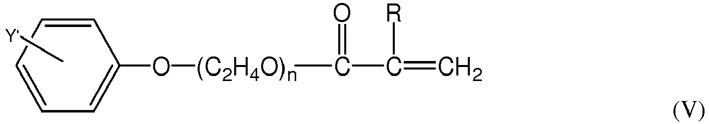 where R is H or CH₃ ; Y' is C₈-C₁₆ alkyl, and n is about 6 to 100;
(2) alkoxypoly(ethyleneoxy)ethyl acrylates of the formula: 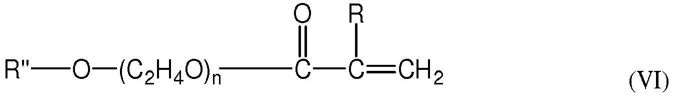 where R is H or CH₃, R" is C₈-C₂₀ alkyl, and n is about 6 to 50; and
(3) alkoxypoly(alkyleneoxy)ethyl acrylates of the formula: 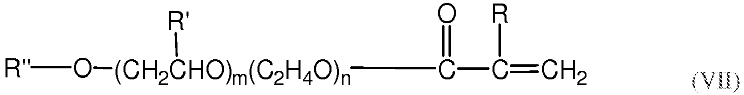 where R is H or CH₃, each R' is C₁-C₄ alkyl, R" is C₈-C₂₀ alkyl, and n is about 6 to 50 and m is about 1 to 40.

Suitable nonionic, copolymerizable α,β-ethylenically unsaturated monomers C2) include, but are not limited to: lauryl methacrylate, stearyl methacrylate, ethylhexyl methacrylate, cinnamyl methacrylate, oleyl methacrylate, ricinoleyl methacrylate, t-butylstyrene, vinyl decanoate, vinyl stearate, vinyl laurate, vinyl oleate, vinyl iso-octyl ether, vinyl β-naphthyl ether, and combinations thereof.

Suitable nonionic urethane monomers include, but are not limited to, alkyl modified alpha-dimethyl-m-isopropenyl benzyl isocyanate, where the alkyl groups are, for example, nonyl-phenol, octyl-phenol, dinonyl-phenol, lauryl, stearyl, oleyl, and the like. Dimethyl-m-isopropenyl benzyl isocyanate is believed to be particularly suitable in the method of the present invention.

The latex dispersion of an anionic polymer suitable for use in the methods of the present invention further comprise, optionally, 0 to 5 percent by weight, based on the total weight of the latex dispersion of an anionic polymer, of at least one crosslinker D). For example, the latex dispersion of an anionic polymers may further include 0 to 3 percent by weight, or even 0 to 2 percent by weight, of at least one crosslinker.

Crosslinkers D) suitable for use in the methods of the present invention include, for example, without limitation, any copolymerizable compound which contains two or more nonconjugated points of ethylenic unsaturation or two or more nonconjugated vinylidene groups of the structure, CH₂=C=, such as divinyltoluene, trivinylbenzene, divinylnaphthalene, trimethylene glycol diacrylate or dimethacrylate, 2-ethylhexane-1,3-dimethyacrylate, divinylxylene, divinylethylbenzene, divinyl ether, divinyl sulfone, allyl ethers of polyhdric compounds such as of glycerol, pentaerythritol, sorbitol, sucrose and resorcinol, divinylketone, divinylsulfide, allyl acrylate, diallyl maleate, diallyl fumarate, diallyl phthalate, diallyl succinate, diallyl carbonate, diallyl malonate, diallyl oxalate, diallyl adipate, diallyl sebacate, diallyl tartrate, diallyl silicate, trimethylolpropane diallyl ether, triallyl tricarballylate, triallyl aconitate, triallyl citrate, triallyl phosphate, N,N-methylenediacrylamide, N,N'-methylenedimethacrylamide, N,N'-ethylidenediacrylamide, 1,2-di-(α-methylmethylenesulfonamide)-ethylene, and combinations thereof. Trimethylolpropane diallyl ether is believed to be particularly suitable.

The weight percentages of the monomers comprising the anionic polymer total 100 percent.

The anionic polymers suitable for use in the methods of the present invention have weight average molecular weights between 10,000 and 20,000,000 g/mol, such as between 10,000 and 10,000,000 g/mol, or even between 40,000 and 1,000,000 g/mol. The anionic polymer molecular weights may be determined by standard methods such as, for example, size exclusion chromatography (also called gel permeation chromatography) or intrinsic viscosity. As will be understood by persons of ordinary skill in the relevant art, the anionic polymers suitable for use in the present invention may be crosslinked and, therefore, may comprise extremely large polymer molecules. The molecular weight of such crosslinked anionic polymers may be extremely high and, therefore, practicably unmeasurable.

A demulsifying effective amount of the aqueous water clarifier composition, where it is to be added to a water in oil emulsion, or to the oil precursor of a water in oil dispersion or emulsion, is suitably 1 to 10,000 ppm, for example 1 to 1,000 ppm, or 1 to 500 ppm, or even 1 to 100 ppm. When added to an oil in water emulsion, for example, without limitation, comprising up to 10 percent by volume water, or to the aqueous precursor of an oil in water dispersion or emulsion, a demulsifying effective amount of anionic polymer is suitably 1 to 10,000 ppm, for example 1 to 1,000 ppm, or 1 to 500 ppm, or 1 to 200 ppm, or 1 to 100 ppm, or 1 to 50 ppm or even 1 to 5 ppm.

Anionic polymers in accordance with the present invention may be produced using any polymerization method, including, for example, solution polymerization, bulk polymerization, heterogeneous phase polymerization (including, for example, emulsion polymerization, suspension polymerization, dispersion polymerization, and reverse-emulsion polymerization), and combinations thereof. Independently, any type of polymerization reaction, including, for example, free radical polymerization, may be used. The preferred method of polymerization for production of anionic polymers suitable for use in the method of the present invention is emulsion polymerization. Such methods are well known in the prior art and the details can be found in USP 4,384,096.

When solution polymerization is used, the solvent may be an aqueous solvent (i.e., the solvent is 75 percent or more water, by weight, based on the weight of the solvent) or an organic solvent (i.e., a solvent that is not aqueous). Some suitable solvents contain, for example, a mixture of water and up to 75 percent by weight, based on the mixture, of one or more OH-containing solvents, which may be selected from the group consisting of: C₁-C₄-alkanols; C₂-C₁₀-alkylene glycols, in which the alkylene chain may be interrupted by one or more non-adjacent oxygen atoms; monoethers of the C₂-C₁₀-alkylene glycols with C₁-C₄-alkanols; and mixtures thereof.

Examples of suitable OH-containing solvents are methanol, ethanol, isopropanol, n-butanol, ethylene glycol, diethylene glycol, methyl diglycol, dipropylene glycol, butyl glycol, butyl diglycol, triethylene glycol, the methylethers of said glycols and also oligomers of ethylene oxide containing from 4 to 6 ethylene oxide units, oligomers of propylene oxide containing from 3 to 6 propylene oxide units and also polyethylene glycol-polypropylene glycol cooligomers. Independently, a solvent that contains water may optionally further contain one or more other water-miscible solvents such as, for example, acetone, methyl ethyl ketone, tetrahydrofuran, dioxane, N-methylpyrrolidone, dimethylformamide, etc.

In some embodiments, at least one copolymer is made by free radical polymerization in solution or emulsion. In some of such embodiments, for example, at least one copolymer is made by free radical solution polymerization in an aqueous solvent.

Typically, polymerization takes place in a reaction vessel. It is contemplated that some or all monomer is added to the reaction vessel while polymerization is occurring. For example, initiator may be added to the reaction vessel prior to monomer, and the conditions of reaction vessel (e.g., temperature, radiation, presence of reactive species, etc.) may be adjusted so that the initiator generates one or more free radicals prior to addition of monomer. For another example, initiator may be added simultaneously with all of or with a portion of one or more monomers. It is also contemplated that initiator may be added both before monomer and also simultaneously with one or more monomer.

In some embodiments, the process for preparing the polymer in accordance with the present invention involves forming a copolymer using one or more free-radical polymerization reactions. Among such embodiments, some involve the use of one or more initiators. An initiator is a molecule or mixture of molecules that, under certain conditions, produces at least one free radical capable of initiating a free-radical polymerization reaction. Some initiators ("thermal initiators") produce such radicals by decomposing when exposed to sufficiently high temperature. Some initiators produce such radicals when certain molecules are mixed together to cause a chemical reaction that results in at least one free radical (such as, for example, some combinations known as "redox" initiators, which contain at least one oxidizing agent and at least one reducing agent). Some initiators ("photoinitiators") produce radicals when exposed to radiation, such as, for example, ultraviolet light or electron beam. Also contemplated are initiators that can be exposed to high temperature simultaneously with the presence of at least one reducing agent, and such initiators may produce free radicals by thermal decomposition, by oxidation-reduction reaction, or by a combination thereof.

Examples of suitable photoinitiators are azobisisobutyronitrile, benzophenone, acetophenone, benzoin ether, benzyl dialkyl ketones and derivatives thereof.

Of the suitable thermal initiators, some have a decomposition temperature of 20°C or higher; or 50°C or higher. Independently, some have decomposition temperature of 180°C or lower; or 90°C or lower. Examples of suitable thermal initiators are inorganic peroxo-compounds, such as peroxodisulfates (ammonium and sodium peroxodisulfate), peroxosulfates, percarbonates and hydrogen peroxide; organic peroxo compounds, such as diacetyl peroxide, di-tert-butyl peroxide, diamyl peroxide, dioctanoyl peroxide, didecanoyl peroxide, dilauroyl peroxide, dibenzoyl peroxide, bis(o-tolyl) peroxide, succinyl peroxide, tert-butyl peracetate, tert-butyl permaleate, tert-butyl perisobutyrate, tert-butyl perpivalate, tert-butyl peroctoate, tert-butyl pemeodecanoate, tert-butyl perbenzoate, tert-butyl peroxide, tert-butyl hydroperoxide, cumene hydroperoxide, tert-butyl peroxy-2-ethylhexanoate and diisopropyl peroxydicarbamate; azo compounds, such as 2,2'- azobisisobutyronitrile, 2,2'-azobis(2-methylbutyronitrile), 2,2'-Azobis (2-methylpropionamidine)-dihydrochloride, and azobis(2-amidopropane) dihydrochloride.

In some embodiments, thermal initiators can optionally be used in combination with reducing compounds. Examples of such reducing compounds are phosphorus-containing compounds, such as phosphorus acid, hypophosphites and phosphinates; sulfur-containing compounds, such as sodium hydrogen sulfite, sodium sulfite, sodium metabisulfite, and sodium formaldehyde sulfoxylate; and hydrazine. It is considered that these reducing compounds, in some cases, also function as chain regulators.

One group of suitable initiators is the group of persulfates, including, for example, sodium persulfate. In some embodiments one or more persulfate is used in the presence of one or more reducing agents, including, for example, metal ions (such as, for example, ferrous ion, copper), sulfur-containing ions (such as, for example, S₂O₃²⁻, HSO₃,⁻ SO₃²⁻, S₂O₅²⁻, and mixtures thereof), and mixtures thereof.

When initiator is used, the amount of all initiator used, as a weight percentage based on the total weight of all monomers present, is 0.01 percent or more; or 0.03 percent or more; or 0.1 percent or more; or 0.3 percent or more. Independently, when initiator is used, the ratio of the weight of all initiator used to the total weight of all monomers used is 7 percent or less; or 3 percent or less; or 1 percent or less.

When initiator is used, it may be added in any fashion, at any time during the process. For example, some or all of the initiator may be added to the reaction vessel at the same time that one or more of the monomers are being added to the reaction vessel. In some embodiments, the initiator is added with a constant rate of addition. In other embodiments, the initiator is added with an increasing rate of addition, for example in two or more steps, where each step uses a higher rate of addition than the previous step. In some embodiments, the rate of addition of initiator increases and then decreases.

The process for preparing polymers in accordance with the present invention also involves the use of a chain regulator. A chain regulator is a compound that acts to limit the length of a growing polymer chain. Some suitable chain regulators are, for example, sulfur compounds, such as mercaptoethanol, 2-ethylhexyl thioglycolate, thioglycolic acid, and dodecyl mercaptan. Other suitable chain regulators are the reducing compounds mentioned herein above. In some embodiments, the chain regulator includes sodium metabisulfite. In some embodiments, the amount of chain regulator, as a percentage by weight based on the total weight of all monomers present, is 0 percent or 0.5 percent or more; or 1 percent or more; or 2 percent or more; or 4 percent or more. Independently, in some embodiments, the amount of chain regulator, as a percentage by weight based on the total weight of all monomers present, is 6 percent or less; or 4 percent or less; or 2 percent or less. In some embodiments, amounts of initiator larger than the amount needed to initiate polymerization can act as a chain regulator.

Other suitable chain regulators are, for example, the OH-containing compounds described hereinabove as suitable for use in a mixture with water to form a solvent. It is contemplated that, in some embodiments, the chain regulator is a component of the solvent and thus the chain regulator may be present in amounts larger than 15 percent by weight total weight of all monomers present.

Chain regulator may be added to the reaction vessel in any fashion. In some embodiments, the chain regulator is added to the reaction vessel at a constant rate of addition. In some embodiments, the chain regulator is added to the reaction vessel at a rate of addition that increases or decreases or a combination thereof.

For each ingredient that is added to the reaction vessel, that ingredient may be added in pure form. Alternatively, an ingredient that is added to the reaction vessel may be added in the form of a solution in a solvent, in the form of a mixture with one or more other ingredient, or as a combination thereof (i.e., as a mixture with one or more other ingredient, where that mixture is dissolved in a solvent). The form in which any one ingredient is added to the reaction vessel may be chosen independently of the form in which any other ingredient is added to the reaction vessel.

The way in which the aqueous water clarifier composition is provided to the oil-water emulsion is not critical and many delivery methods are well known and understood by persons of ordinary skill in the relevant art.

The use of reverse emulsion breaker compounds, which are typically lower molecular weight, high charge materials that break reverse emulsions so that the flocculants can function better, is common in petroleum industry operations. Examples of such reverse emulsion breaker compounds are, without limitation, polyamines, polyamine quats, tannins, and metal salts (Al-, Fe-based chlorides, hydroxides, etc.). The method of the present invention may further comprise use of the above-described anionic polymers along with such reverse emulsion breaker compounds.

Blends and formulations of the aqueous water clarifier composition with other components such as, without limitation, additional antifreeze agents, solvents, biocides, neutralizing agents, flow aids, and the like, may be formed and used in accordance with the method of the present invention. Such blends and formulations may be prepared as an emulsion or aqueous solution or otherwise.

### EXAMPLES

Examples 1 to 5 demonstrate an aqueous water clarifier composition of the present invention comprising an anionic polymer and a chelating agent. Comparative Examples A to E are aqueous water clarifier composition comprising an anionic polymer that are not examples of the present invention. The aqueous water clarifier composition samples are made using a mass balance based on the total weight of the composition. The order of addition of the components for the aqueous water clarifier compositions Examples 1 to 5 is as follows: if present, the alcohol is added first followed by the water (if used), the base (1% NaOH), the chelating agent, and finally the anionic polymer. For Comparative Examples A to E the order of addition is the same as for the Examples 1 to 5, except no chelating agent is added, in other words the order is: if present, the alcohol is added first followed by the water (if used), the NaOH, and finally the anionic polymer. Each sample is gently shaken between the additions of each component.

The compositions for Comparative Examples 1 to 5 and Examples A to E are given in Table 1 below in weight percent based on the total weight of the composition.

In Table 1:
"Anionic Polymer-1" is an anionic polymer comprising a 30 percent active latex containing a methacrylic acid/ethyl acrylate copolymer that incorporates 5 percent hydrophobe-containing monomer;
"Anionic Polymer-2" is an anionic polymer comprising a 28 percent active latex containing a lightly crosslinked methacrylic acid/ethyl acrylate copolymer;
"Anionic Polymer-3" is an anionic polymer comprising a 30 percent active latex containing a methacrylic acid/ethyl acrylate copolymer that incorporates 10 percent hydrophobe-containing monomer;
"NaOH" is a 1% sodium hydroxide solution, in Table 1 the amount is given as weight percent as well as mmol/g NaOH/g actives); and
"Chelating Agent" is sodium salt(s) of ethylenediamine tetraacetic acid available as VERSENE™ 100 from The Dow Chemical Company.

### Water Clarification.

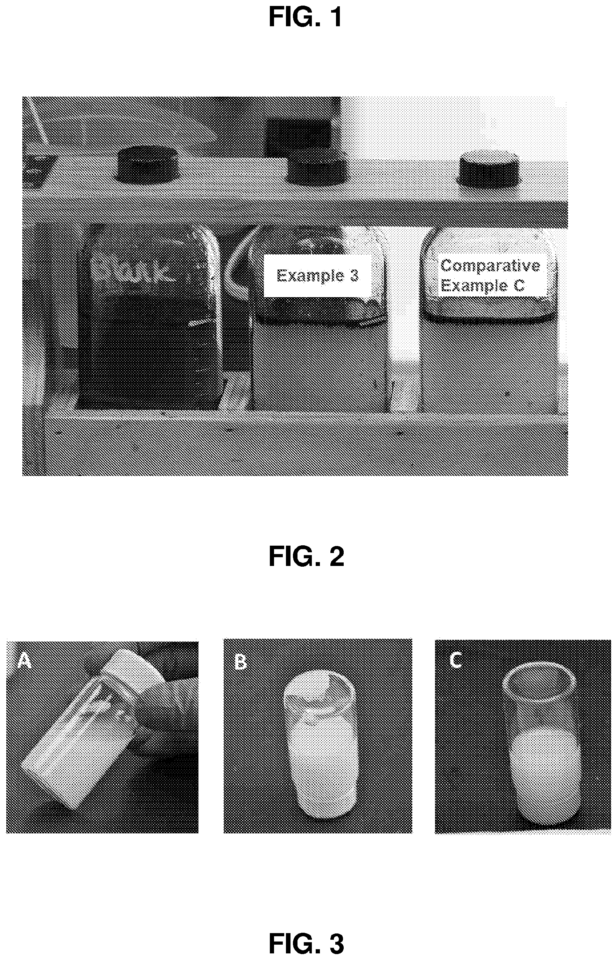

Water clarification is evaluated using bottle testing. 1 percent oil-in-water emulsions of ADCO crude oil are made using a SILVERSON™ L5M-A Disperser fitted with a 1 inch (2.5 cm) diameter fine stator. To make the emulsions, 850 ml of water is charged to a 1000 ml beaker. When the mixer shear rate reaches 10000 RPM, 8.5 ml of crude oil is quickly added below the surface of the water. The emulsion is left to shear for 1 minute. 100 ml of the emulsion is added to 8 bottles (6 oz. Berlin Packaging #1051). 200 ppm of the water clarifier is dosed to each bottle except the blank. The bottles are then shaken vigorously by hand 50 times. After shaking, the emulsions are evaluated for speed of separation, water clarity, quality of interface and redispersibility. The water clarity of the samples are visually inspected and rated on a scale of 1 to 5 with is comparable to the blank with no clarifier added and 5 for maximum clarification (e.g., similar to water). **FIG. 1** shows a 1 percent crude oil-in-water emulsion untreated (blank), treated with 200 ppm of Example 3, and treated with 200 ppm of Comparative Example C.

### Pumpability/Fouling Determination.

To determine whether the water clarifiers foul in the presence of iron ions, a stock solution of iron (III) chloride (FeCl₃) is added drop wise, while stirring with a magnetic stir bar and stir plate, to a 10 ml sample of each Example/Comparative Example. For each Example/Comparative Example final concentrations of 5 ppm iron (Fe³⁺) and 50 ppm Fe³⁺ are made. The samples are then gently shaken on a shaker for at least 1 hour and then visually inspected to determine if there is any aggregates that form in the sample. It is noted in Table 1 whether or not there is any visible polymer aggregates that formed. **FIG. 2** shows aggregate formation for Comparative Example A at both 5ppm and 50ppm Fe³⁺ addition (A) and (B), respectively, and no aggregate formation for Examples 1 at 50 ppm Fe³⁺ (C). **FIG. 3** shows for 50 ppm Fe³⁺ addition agglomeration in Comparative Example C and no agglomeration in Example 3.

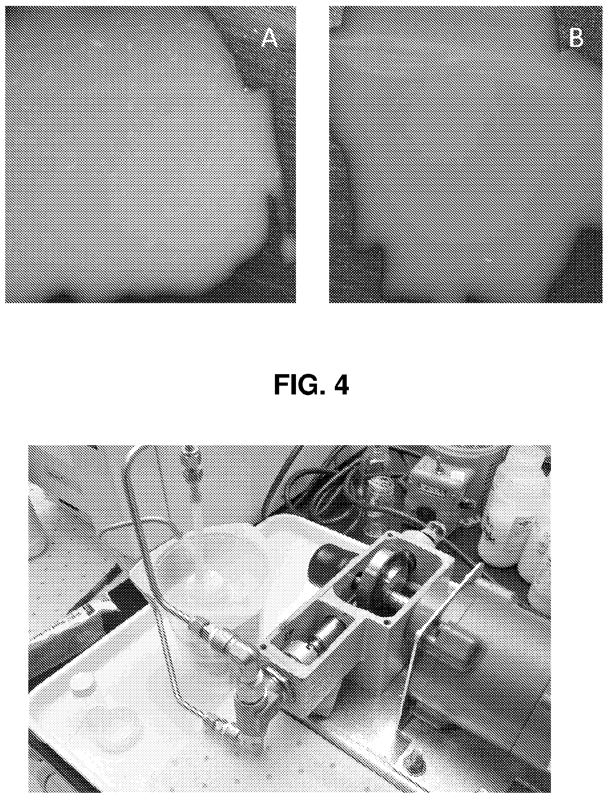

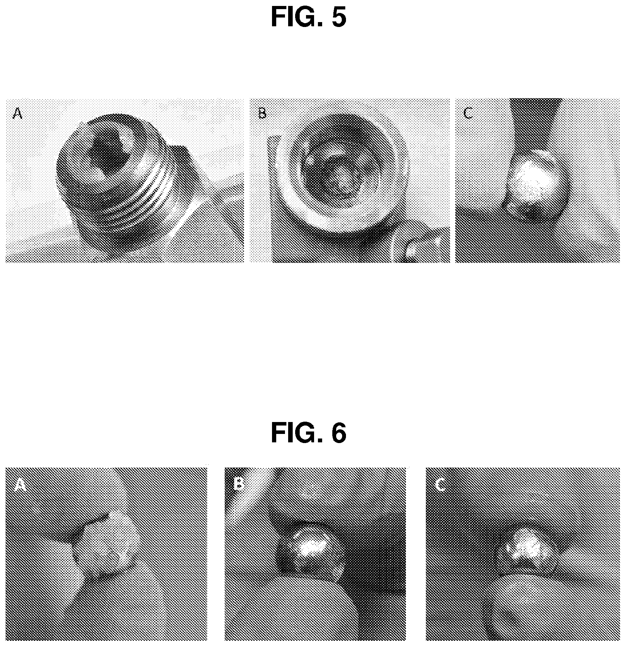

Pumpability/pump fouling is determined using 250 g samples of aqueous water clarifier compositions. The samples are pumped through a TEXSTEAM series 2200 piston pump **(****FIG. 4****)** for at least 18 hours, after which time the pump is disassembled and the check valve is visually inspected for fouled polymer buildup. It is noted in Table 1 whether or not there is any visible polymer buildup in the pump. **FIG. 5** shows an example of polymer build up for Comparative Example A in the pump (A) and ball valve (B) and (C). **FIG. 6** shows an example of polymer build up on the check valve for Comparative Example A after pumping for 18 hours (A), lack of buildup on the bearing for Example 1 after pumping for 18 hours (B), and lack of buildup on the bearing for Example 1 after pumping for 10 days (C).

**Table 1**

| Ex. Com. Ex. | AP-1, % | AP-2, % | AP-3, % | Ethylene Glycol, % | Glycerin, % | Water, % | 1%NaOH, % (mmol/g) | Chelating Agent, % | Clarification | Aggregate Formation 5ppm/50 ppm Fe³⁺ | Pump Fouling |
|---|---|---|---|---|---|---|---|---|---|---|---|
| 1 | 39.72 | | | | 58 | | 1 (0.02) | 1.28 | 5 | no/no | no |
| 2 | 50 | | | | | 47.46 | 1 (0.02) | 1.54 | 5 | no/no | no |
| 3 | | 30 | | 50 | | 17.72 | 1 (0.03) | 1.28 | 5 | no/no | no |
| 4 | | 50 | | | | 47.42 | 1 (0.02) | 1.28 | 5 | no/no | no |
| 5 | | | 50 | | | 47.46 | 1 (0.02) | 1.54 | 5 | no/no | no |
| A | 42 | | | | 58 | | 1 (0.02) | | 5 | yes/yes | yes |
| B | 50 | | | | | 49 | 1 (0.02) | | 5 | yes/yes | yes |
| C | | 30 | | 50 | | 17 | 3 (0.09) | | 5 | yes/yes | yes |
| D | | 50 | | | | 48.5 | 1.5 (0.03) | | 5 | yes/yes | yes |
| E | | | 50 | | | 49 | 1 (0.02) | | 5 | yes/yes | yes |

## Claims

1. An aqueous water clarifier composition comprising:
i) a latex dispersion of an anionic polymer in an amount of from 20 to 80 weight percent, wherein the anionic polymer comprises:
A) at least one C₃-C₈ α,β-ethylenically unsaturated carboxylic acid monomer;
B) at least one nonionic, copolymerizable α,β-ethylenically unsaturated monomer;
C) optionally, one or more of the following:
1) at least one nonionic vinyl surfactant ester,
2) at least one nonionic, copolymerizable α,β-ethylenically unsaturated monomer having longer polymer chains than monomer B), and
3) at least one nonionic urethane monomer; and
D) optionally, at least one crosslinker;
ii) a chelating agent in an amount of from 500 to 8,000 ppm;
iii) a base in an amount of from 0.01 mmol/g to less than 0.22 mmol/g based on the dry weight of the anionic polymer,
(iv) optionally an alcohol, and
v) the balance of the composition is water,
wherein weight percents of i), ii), iii) and v) total 100 and are based on the total weight of the aqueous water clarifier composition.

2. The composition of Claim 1 further comprising:
iv) an alcohol in the amount of from 5 to 70 weight percent based on the total weight of the aqueous water clarifier composition.

3. The composition of Claim 1, wherein the carboxylic acid monomer A) is methacrylic acid, acrylic acid or a mixture thereof and the unsaturated monomer B) is a monovinyl ester.

4. The composition of Claim 1 wherein the chelating agent is one or more sodium salt of EDTA or one or more sodium salt of citric acid.

5. The composition of Claim 2 wherein the alcohol is glycerin, propylene glycol, or ethylene glycol.

6. The aqueous water clarifier composition of Claim 1 wherein
i) the latex dispersion of an anionic polymer comprises:
A) 15 to 80 percent by weight of at least one C₃-C₈ α,β-ethylenically unsaturated carboxylic acid monomer of the formula: 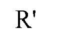 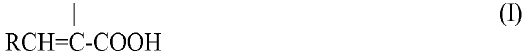
where R is H, and R' is H, C₁-C₄ alkyl, or --CH₂COOX;
R is --COOX and R' is H or --CH₂COOX; or
R is CH₃ and R' is H; and
X is H or C₁-C₄ alkyl;
B) 15 to 80 percent by weight of at least one nonionic, copolymerizable α,β-ethylenically unsaturated monomer of the formula:
CH₂=CYZ (II)
where
Y is H and Z is --COOR, --C₆H₄R', CN, Cl, 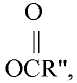
or -CH=CH₂;
Y is CH₃ and Z is --COOR, --C₆H₄R', CN or -CH=CH₂; or
Y and Z are Cl; and
R is C₁-C₈ alkyl or C₂-C₈ hydroxyalkyl;
R' is H, Cl, Br, or C₁-C₃ alkyl; and
R" is C₁-C₈ alkyl; and
C) 0 to 50 percent by weight of one or more of the following monomers:
1) at least one nonionic vinyl surfactant ester of the formula: 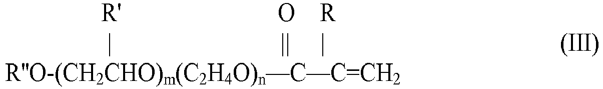 where
R is H or CH₃, each R' is C₁-C₄ alkyl,
R" is C₈-C₂₀ alkyl or C₈-C₁₆ alkylphenyl,
n is an average number from 6-100, and m is an average number from about 0-50 provided that n ≥ m and (n + m) is about 6-100; and
2) at least one nonionic, copolymerizable α,β-ethylenically unsaturated monomer having longer polymer chains than monomer B) and having the formula;
CH₂=CYZ (IV)
where Y is H and Z is --COOR, --C₆H₄R', or 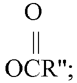 Y is CH₃ and Z is --COOR, --C₆H₄R' and R is C₁₀-C₂₀ alkyl hydroxyalkyl; R' is C₄-C₈ alkyl; and R" is C₉-C₂₀ alkyl; and
3) at least one nonionic urethane monomer which is the urethane reaction product of a monohydric non-ionic surfactant with a monoethylenically unsaturated monoisocyanate wherein weight percents are based on the total weight of the latex dispersion of an anionic polymer.

7. A method for inhibiting and mitigating the formation of oil-water emulsions generated during petroleum industry operations from oil and aqueous precursors which become mixed during said operations, said method comprising providing to the oil precursor, the aqueous precursor, or both, prior to, during or after mixing of the precursors, a demulsifying effective amount of an aqueous water clarifier composition comprising:
i) a latex dispersion of an anionic polymer in an amount of from 20 to 80 weight percent, wherein the anionic polymer comprises:
A) at least one C₃-C₈ α,β-ethylenically unsaturated carboxylic acid monomer;
B) at least one nonionic, copolymerizable α,β-ethylenically unsaturated monomer;
C) optionally, one or more of the following:
1) at least one nonionic vinyl surfactant ester,
2) at least one nonionic, copolymerizable α,β-ethylenically unsaturated monomer having longer polymer chains than monomer B), and
3) at least one nonionic urethane monomer; and
D) optionally, at least one crosslinker;
ii) a chelating agent in an amount of from 500 to 8,000 ppm;
iii) a base in an amount of from 0.01 mmol/g to less than 0.22 mmol/g based on the dry weight of the anionic polymer,
(iv) optionally an alcohol, and
v) the balance of the composition is water,
wherein weight percents of i), ii), iii) and v) total 100 and are based on the total weight of the aqueous water clarifier composition.

8. The method according to Claim 7, wherein the oil-water dispersion or emulsion is an oil in water dispersion or emulsion.

9. The method according to Claim 7, wherein the oil-water dispersion or emulsion is a water in oil dispersion or emulsion.

10. The method according to Claim 7, wherein the aqueous water clarifier composition is provided to the aqueous precursor.

11. The method according to Claim 7, wherein the demulsifying effective amount of the aqueous water clarifier composition is 1 to 10,000 ppm.

## Patentansprüche

1. Eine wässrige Wasserklärmittelzusammensetzung, beinhaltend:
i) eine Latexdispersion eines anionischen Polymers in einer Menge von 20 bis 80 Gewichtsprozent, wobei das anionische Polymer Folgendes beinhaltet:
A) mindestens ein C₃-C₈ α,β-ethylenisch ungesättigtes Carbonsäuremonomer;
B) mindestens ein nichtionisches, copolymerisierbares, α,β-ethylenisch ungesättigtes Monomer;
C) wahlweise eines oder mehrere der Folgenden:
1) mindestens einen nichtionischen Vinyltensidester,
2) mindestens ein nichtionisches, copolymerisierbares, α,β-ethylenisch ungesättigtes Monomer mit längeren Polymerketten als Monomer B), und
3) mindestens ein nichtionisches Urethanmonomer; und
D) wahlweise mindestens ein Vernetzungsmittel;
ii) einen Chelatbildner in einer Menge von 500 bis 8 000 ppm;
iii) eine Base in einer Menge von 0,01 mmol/g bis weniger als 0,22 mmol/g, bezogen auf das Trockengewicht des anionischen Polymers,
iv) wahlweise einen Alkohol, und
v) der Rest der Zusammensetzung Wasser ist,
wobei Gewichtsprozentsätze von i), ii), iii) und v) 100 ergeben und auf dem Gesamtgewicht der wässrigen Wasserklärmittelzusammensetzung basieren.

2. Zusammensetzung gemäß Anspruch 1, ferner beinhaltend:
iv) einen Alkohol in der Menge von 5 bis 70 Gewichtsprozent, bezogen auf das Gesamtgewicht der wässrigen Wasserklärmittelzusammensetzung.

3. Zusammensetzung gemäß Anspruch 1, wobei das Carbonsäuremonomer A) Methacrylsäure, Acrylsäure oder eine Mischung davon ist und das ungesättigte Monomer B) ein Monovinylester ist.

4. Zusammensetzung gemäß Anspruch 1, wobei der Chelatbildner ein oder mehrere Natriumsalze von EDTA oder ein oder mehrere Natriumsalze von Citronensäure ist.

5. Zusammensetzung gemäß Anspruch 2, wobei der Alkohol Glycerin, Propylenglycol oder Ethylenglycol ist.

6. Wässrige Wasserklärmittelzusammensetzung gemäß Anspruch 1, wobei
i) die Latexdispersion eines anionischen Polymers Folgendes beinhaltet:
A) 15 bis 80 Gewichtsprozent mindestens eines C₃-C₈ α,β-ethylenisch ungesättigten Carbonsäuremonomers der Formel: 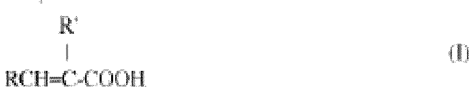
wobei R H ist und R' H, C₁-C₄-Alkyl oder --CH₂COOX ist;
R --COOX ist und R' H oder --CH₂COOX ist; oder
R CH₃ ist und R' H ist; und
X H oder C₁-C₄-Alkyl ist;
B) 15 bis 80 Gewichtsprozent mindestens eines nichtionischen, α,β-ethylenisch ungesättigten Carbonsäuremonomers der Formel:
CH₂=CYZ (II)
wobei
Y H ist und Z --COOR, --C₆H₄R', CN, Cl, 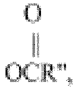
oder-CH=CH₂ ist;
Y CH₃ ist und Z --COOR, --C₆H₄R', CN oder -CH=CH₂ ist; oder
Y und Z Cl sind; und
R C₁-C₈-Alkyl oder C₂-C₈-Hydroxyalkyl ist;
R' H, Cl, Br oder C₁-C₃-Alkyl ist; und
R" C₁-C₈-Alkyl ist; und
C) 0 bis 50 Gewichtsprozent eines oder mehrerer der folgenden Monomere:
1) mindestens eines nichtionischen Vinyltensidesters der Formel: 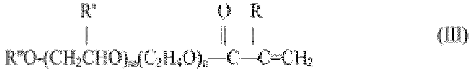 wobei
R H oder CH₃ ist, jedes R' C₁-C₄-Alkyl ist,
R" C₈-C₂₀-Alkyl oder C₈-C₁₆-Alkylphenyl ist,
n eine durchschnittliche Zahl von 6-100 ist und m eine durchschnittliche Zahl von etwa 0-50 ist, vorausgesetzt, dass n ≥ m und (n + m) etwa 6-100 ist; und
2) mindestens eines nichtionischen, copolymerisierbaren, α,β-ethylenisch ungesättigten Monomers mit längeren Polymerketten als Monomer B) und mit der Formel;
CH₂=CYZ (IV)
wobei Y H ist und Z --COOR, C₆H₄R' oder 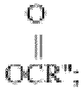 ist; Y CH₃ ist und Z --COOR, C₆H₄R' ist und R C₁₀-C₂₀-Alkylhydroxyalkyl ist; R' C₄-C₈-Alkyl ist; und R" C₉-C₂₀-Alkyl ist; und
3) mindestens eines nichtionischen Urethanmonomers, das das Urethanreaktionsprodukt eines monohydrischen nichtionischen Tensids mit einem monoethylenisch ungesättigten Monoisocyanat ist,
wobei Gewichtsprozente auf dem Gesamtgewicht der Latexdispersion eines anionischen Polymers basieren.

7. Ein Verfahren zum Hemmen und Abschwächen der Bildung von Öl-Wasser-Emulsionen, erzeugt während Arbeiten der Erdölindustrie aus Öl und wässrigen Vorstufen, die während der Arbeiten vermischt werden, wobei das Verfahren das Bereitstellen einer demulgierend wirksamen Menge einer wässrigen Wasserklärmittelzusammensetzung an die Ölvorstufe, die wässrige Vorstufe oder beide vor, während oder nach dem Mischen der Vorstufen beinhaltet, beinhaltend:
i) eine Latexdispersion eines anionischen Polymers in einer Menge von 20 bis 80 Gewichtsprozent, wobei das anionische Polymer Folgendes beinhaltet:
A) mindestens ein C₃-C₈ α,β-ethytenisch ungesättigtes Carbonsäuremonomer;
B) mindestens ein nichtionisches, copolymerisierbares, α,β-ethytenisch ungesättigtes Monomer;
C) wahlweise eines oder mehrere der Folgenden:
1) mindestens einen nichtionischen Vinyltensidester,
2) mindestens ein nichtionisches, copolymerisierbares, α,β-ethytenisch ungesättigtes Monomer mit längeren Polymerketten als Monomer B), und
3) mindestens ein nichtionisches Urethanmonomer; und
D) wahlweise mindestens ein Vernetzungsmittel;
ii) einen Chelatbildner in einer Menge von 500 bis 8 000 ppm;
iii) eine Base in einer Menge von 0,01 mmol/g bis weniger als 0,22 mmol/g, bezogen auf das Trockengewicht des anionischen Polymers,
iv) wahlweise einen Alkohol, und
v) der Rest der Zusammensetzung ist Wasser,
wobei Gewichtsprozentsätze von i), ii), iii) und v) 100 ergeben und auf dem Gesamtgewicht der wässrigen Wasserklärmittelzusammensetzung basieren.

8. Verfahren gemäß Anspruch 7, wobei die Öl-Wasser-Dispersion oder -Emulsion eine Ölin-Wasser-Dispersion oder -Emulsion ist.

9. Verfahren gemäß Anspruch 7, wobei die Öl-Wasser-Dispersion oder -Emulsion eine Wasser-in-ÖI-Dispersion oder -Emulsion ist.

10. Verfahren gemäß Anspruch 7, wobei die wässrige Wasserklärmittelzusammensetzung der wässrigen Vorstufe bereitgestellt wird.

11. Verfahren gemäß Anspruch 7, wobei die demulgierend wirksame Menge der wässrigen Wasserklärmittelzusammensetzung 1 bis 10 000 ppm beträgt.

## Revendications

1. Une composition aqueuse pour clarificateur d'eau comprenant :
i) une dispersion de latex d'un polymère anionique dans une quantité allant de 20 à 80 pour cent en poids, le polymère anionique comprenant :
A) au moins un monomère d'acide carboxylique α,β-éthyténiquement insaturé en C₃-C₈ ;
B) au moins un monomère α,β-éthyténiquement insaturé copolymérisable, non ionique ;
C) facultativement, un ou plusieurs des constituants suivants :
1) au moins un ester tensioactif vinylique non ionique,
2) au moins un monomère α,β-éthyténiquement insaturé copolymérisable, non ionique ayant des chaînes de polymère plus longues que le monomère B), et
3) au moins un monomère d'uréthane non ionique ; et
D) facultativement, au moins un agent de réticulation ;
ii) un agent chélatant dans une quantité allant de 500 à 8 000 ppm ;
iii) une base dans une quantité allant de 0,01 mmol/g à moins de 0,22 mmol/g rapporté au poids sec du polymère anionique,
iv) facultativement un alcool, et
v) le reste de la composition est de l'eau,
dans laquelle les pourcentages en poids de i), ii), iii) et v) font 100 en tout et sont rapportés au poids total de la composition aqueuse pour clarificateur d'eau.

2. La composition de la revendication 1 comprenant en sus :
iv) un alcool dans la quantité allant de 5 à 70 pour cent en poids rapporté au poids total de la composition aqueuse pour clarificateur d'eau.

3. La composition de la revendication 1, dans laquelle le monomère d'acide carboxylique A) est de l'acide méthacrylique, de l'acide acrylique ou un mélange de ceux-ci et le monomère insaturé B) est un ester monovinylique.

4. La composition de la revendication 1 dans laquelle l'agent chélatant est un sel de sodium d'EDTA ou plus ou un sel de sodium d'acide citrique ou plus.

5. La composition de la revendication 2 dans laquelle l'alcool est la glycérine, le propylène glycol, ou l'éthylène glycol.

6. La composition aqueuse pour clarificateur d'eau de la revendication 1 dans laquelle i) la dispersion de latex d'un polymère anionique comprend :
A) 15 à 80 pour cent en poids d'au moins un monomère d'acide carboxylique α,β-éthyténiquement insaturé en C₃-C₈ de la formule : 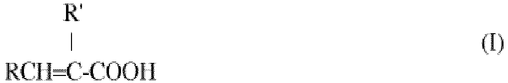
où R est H, et R' est H, un alkyle en C₁-C₄, ou --CH₂COOX ;
R est --COOX et R' est H ou --CH₂COOX ; ou
R est CH₃ et R' est H ; et
X est H ou un alkyle en C₁-C₄ ;
B) 15 à 80 pour cent en poids d'au moins un monomère α,β-éthyténiquement insaturé copolymérisable, non ionique de la formule :
CH₂=CYZ (II)
où
Y est H et Z est --COOR, --C₆H₄R', CN, Cl, 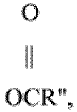
ou -CH=CH₂ ;
Y est CH₃ et Z est --COOR, --C₆H₄R', CN ou -CH=CH₂ ; ou
Y et Z sont Cl ; et
R est un alkyle en C₁-C₈ ou un hydroxyalkyle en C₂-C₈ ;
R' est H, Cl, Br, ou un alkyle en C₁-C₃ ; et
R" est un alkyle en C₁-C₈ ; et
C) 0 à 50 pour cent en poids d'un ou de plusieurs des monomères suivants :
1) au moins un ester tensioactif vinylique non ionique de la formule : 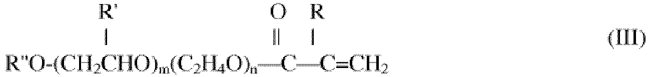 où
R est H ou CH₃, chaque R' est un alkyle en C₁-C₄,
R" est un alkyle en C₈-C₂₀ ou un alkylphényle en C₈-C₁₆,
n est un nombre moyen allant de 6 à 100, et m est un nombre moyen allant d'environ 0 à 50 à condition que n ≥ m et que (n + m) aille d'environ 6 à 100 ; et
2) au moins un monomère α,β-éthyléniquement insaturé copolymérisable, non ionique ayant des chaînes de polymère plus longues que le monomère B) et ayant la formule :
CH₂=CYZ (IV)
où Y est H et Z est --COOR, --C₆H₄R', ou 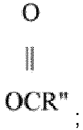 Y est CH₃ et Z est --COOR, C₆H₄R' et R est un alkylhydroxyalkyle en C₁₀-C₂₀ ; R' est un alkyle en C₄-C₈ ; et R" est un alkyle en C₉-C₂₀ ; et
3) au moins un monomère d'uréthane non ionique, lequel est le produit uréthane de la réaction d'un tensioactif non ionique monohydrique avec un monoisocyanate monoéthyléniquement insaturé
dans laquelle les pourcentages en poids sont rapportés au poids total de la dispersion de latex d'un polymère anionique.

7. Une méthode pour inhiber et atténuer la formation d'émulsions huile-eau générées au cours d'opérations de l'industrie pétrolière à partir de précurseurs d'huile et aqueux qui viennent à se mélanger au cours desdites opérations, ladite méthode comprenant le fait de fournir au précurseur d'huile, au précurseur aqueux, ou aux deux, préalablement au, au cours du ou postérieurement au mélange des précurseurs, une quantité désémulsifiante efficace d'une composition aqueuse pour clarificateur d'eau comprenant :
i) une dispersion de latex d'un polymère anionique dans une quantité allant de 20 à 80 pour cent en poids, le polymère anionique comprenant :
A) au moins un monomère d'acide carboxylique α,β-éthyténiquement insaturé en C₃-C₈ ;
B) au moins un monomère α,β-éthyténiquement insaturé copolymérisable, non ionique ;
C) facultativement, un ou plusieurs des constituants suivants :
1) au moins un ester tensioactif vinylique non ionique,
2) au moins un monomère α,β-éthyténiquement insaturé copolymérisable, non ionique ayant des chaînes de polymère plus longues que le monomère B), et
3) au moins un monomère d'uréthane non ionique ; et
D) facultativement, au moins un agent de réticulation ;
ii) un agent chélatant dans une quantité allant de 500 à 8 000 ppm ;
iii) une base dans une quantité allant de 0,01 mmol/g à moins de 0,22 mmol/g rapporté au poids sec du polymère anionique,
iv) facultativement un alcool, et
v) le reste de la composition est de l'eau,
dans laquelle les pourcentages en poids de i), ii), iii) et v) font 100 en tout et sont rapportés au poids total de la composition aqueuse pour clarificateur d'eau.

8. La méthode selon la revendication 7, dans laquelle la dispersion ou l'émulsion huile-eau est une dispersion ou émulsion huile dans eau.

9. La méthode selon la revendication 7, dans laquelle la dispersion ou l'émulsion huile-eau est une dispersion ou émulsion eau dans huile.

10. La méthode selon la revendication 7, dans laquelle la composition aqueuse pour clarificateur d'eau est fournie au précurseur aqueux.

11. La méthode selon la revendication 7, dans laquelle la quantité désémulsifiante efficace de la composition aqueuse pour clarificateur d'eau va de 1 à 10 000 ppm.
